# EUROPÄISCHE PATENTSCHRIFT

(11) **EP 3 734 385 B1**
(45) Veröffentlichungstag und Bekanntmachung des Hinweises auf die Patenterteilung: **05.10.2022**
(21) Anmeldenummer: 19172271.9
(22) Anmeldetag: 02.05.2019
(51) Int. Cl.: G05B 23/02

(54) **VERFAHREN ZUM RECHNERGESTÜTZTEN VERARBEITEN VON ZUSTANDSMELDUNGEN IN EINER AUTOMATISIERUNGSANLAGE**
METHOD FOR COMPUTER-CONTROLLED PROCESSING OF CONDITION MESSAGES IN AN AUTOMATION SYSTEM
PROCÉDÉ DE TRAITEMENT ASSISTÉ PAR ORDINATEUR DES MESSAGES D'ÉTAT DANS UNE INSTALLATION D'AUTOMATISATION

(43) Veröffentlichungstag der Anmeldung: 04.11.2020
(73) Patentinhaber: Siemens Aktiengesellschaft, 80333 München (DE)
(72) Erfinder: Gross, Ralf, 90471 Nürnberg (DE); Klos, Hans-Henning, 91249 Weigendorf (DE); Kohler, Benjamin, 90408 Nürnberg (DE); Riedl, Wolfgang, 90443 Nürnberg (DE); Schnittger, Jens, 91475 Lonnerstadt (DE)

(56) Entgegenhaltungen:
- EP-A1- 3 454 154
- DE-A1- 10 161 655

## Beschreibung

Die Erfindung betrifft ein Verfahren und eine Vorrichtung zum rechnergestützten Verarbeiten von Zustandsmeldungen in einer Automatisierungsanlage.

Aus dem Stand der Technik sind derartige Verfahren bekannt.

So offenbart zum Beispiel die Europäische Offenlegungsschrift EP 3 454 154 A1 ein Verfahren zur Auswertung eines Meldungsarchivs bezüglich Meldungen, die bei einer Steuerung oder Überwachung einer industriellen Anlage generiert werden. Im Rahmen der Auswertung wird dabei eine absolute Auftretenshäufigkeit einzelner Meldungsidentifikationen oder auch eine Übergangswahrscheinlichkeit zwischen jeweils zwei Meldungsidentifikationen ermittelt.

Weiterhin offenbart die Deutsche Offenlegungsschrift DE 101 61 655 A1 ein Verfahren zur prädikativen Wartung einer bestimmten Komponente durch Verwendung von MarkovÜbergangswahrscheinlichkeiten. Dabei wird ein diskret abgetastetes Signal als Zeitreihe dargestellt, die wiederum als Zweizustands-Markov-Prozesse erster Ordnung modelliert wird. Das Verfahren ermöglicht es, Systeme und/oder Komponenten in "gesunde" Zustände zu klassifizieren. Weiterhin werden Bedingungen, die eine anstehende Fehlfunktion signalisieren, durch Berechnung von Übergangswahrscheinlichkeiten gewählter Variablen erzielt.

Im Betrieb von Automatisierungsanlagen werden in der Regel Zustandsmeldungen erfasst, die häufig auch als Alarmmeldungen bezeichnet werden. Diese Meldungen werden immer dann erzeugt, wenn sich der Zustand einer entsprechenden Komponente in der Automatisierungsanlage verändert. Führt ein Zustandswechsel zu einem Zustand der Komponente, der vom Normalbetrieb abweicht (z.B. Stillstand der Komponente), ist es wünschenswert, die Ursache für diesen Zustand zu identifizieren. Oftmals wird ein fehlerhafter Zustand dabei durch Propagationseffekte von Fehlern in anderen Anlagenkomponenten hervorgerufen.

Zum Auffinden von Ursachen für Fehlfunktionen in Komponenten einer Automatisierungsanlage wird in der Regel eine sog. Root-Cause-Analyse (Fehler-Ursachen-Analyse) durchgeführt. Solche Analysen können automatisiert Ursachen für fehlerhafte Zustände in der Automatisierungsanlage ermitteln. Root-Cause-Analysen sind an sich bekannt, benötigen zur Identifikation von Propagationseffekten jedoch Zeitparameter, welche die Zustände der verschiedenen Anlagenkomponenten zeitlich in Relation zueinander setzen.

Herkömmlicherweise werden Zeitparameter für eine Root-Cause-Analyse im Rahmen von manuellen Zeitmessungen ermittelt. Dabei werden aktiv bestimmte Betriebszustände in den Anlagenkomponenten herbeigeführt und Zeitspannen zwischen dem Auftreten solcher Betriebszustände gemessen. Die manuelle Erfassung solcher Zeitparameter ist sehr aufwändig und kann nicht im Normalbetrieb der Anlage durchgeführt werden.

Alternativ besteht die Möglichkeit, entsprechende Zeitparameter aus der digitalen Spezifikation der geplanten Automatisierungsanlage abzuleiten. Dies hat den Nachteil, dass nicht berücksichtigt werden kann, wenn eine analysierte Anlage von der ursprünglich geplanten Anlage abweicht. Demzufolge können relativ große systematische Fehler bei der Bestimmung der Zeitparameter auftreten.

Aufgabe der Erfindung ist es, ein Verfahren und eine Vorrichtung zum rechnergestützten Verarbeiten von Zustandsmeldungen in einer Automatisierungsanlage zu schaffen, mit denen automatisch aus im Normalbetrieb der Anlage erfassten Daten Zeitparameter extrahiert werden können, welche anschließend im Rahmen einer Root-Cause-Analyse verarbeitbar sind.

Diese Aufgabe wird durch das Verfahren gemäß Patentanspruch 1 bzw. die Vorrichtung gemäß Patentanspruch 11 gelöst. Weiterbildungen der Erfindung sind in den abhängigen Ansprüchen definiert.

Das erfindungsgemäße Verfahren dient zum rechnergestützten Verarbeiten von Zustandsmeldungen in einer Automatisierungsanlage, wobei die Zustandsmeldungen von einer Vielzahl von Komponenten bei der Ausführung eines automatisierten Prozesses in der Automatisierungsanlage generiert werden und zusammen mit deren Generierungszeitpunkten erfasst werden. Der Begriff der Komponente der Automatisierungsanlage ist dabei weit zu verstehen. Insbesondere kann es sich bei der Komponente um ein abgeschlossenes Aggregat in der Automatisierungsanlage handeln, welches mit anderen Aggregaten wechselwirkt. Nichtsdestotrotz können Komponenten auch kleinere Bestandteile der Automatisierungsanlage definieren, die miteinander in Wechselwirkung stehen.

Eine im erfindungsgemäßen Verfahren verarbeitete Zustandsmeldung einer jeweiligen Komponente der Anlage zeichnet sich dadurch aus, dass sie bei einem Wechsel von einem vorhergehenden auf einen neuen Zustand in der jeweiligen Komponenten generiert wird und den neuen Zustand anzeigt. Im erfindungsgemäßen Verfahrens ist für eine jeweilige Komponente zumindest eines Teils der Komponenten und insbesondere aller Komponenten der Automatisierungsanlage eine Musterbeschreibung bereitgestellt, welche für einen oder mehrere Zustände in der jeweiligen Komponente jeweils einen oder mehrere ursächliche Zustände angibt, die dem entsprechenden Zustand in der jeweiligen Komponente zugewiesen sind. Jeder ursächliche Zustand gehört dabei zu einer anderen Komponente als der jeweiligen Komponente. Ferner kann jeder ursächliche Zustand eine Ursache für den Zustand in der jeweiligen Komponente sein, dem der ursächliche Zustand zugewiesen ist.

Im Rahmen des erfindungsgemäßen Verfahrens werden für die jeweilige Komponente die nachfolgend beschriebenen Schritte a) bis c) durchgeführt. Diese Schritte können zumindest teilweise oder ganz während der Ausführung des automatisierten Prozesses oder ggf. auch nach dessen Ausführung durchgeführt werden.

Im Schritt a) werden für eine Vielzahl von durch die jeweilige Komponente generierten Zustandsmeldungen jeweils basierend auf der Musterbeschreibung für den aktuellen Zustand in der generierten Zustandsmeldung diejenigen, dem aktuellen Zustand zugewiesenen ursächlichen Zustände ermittelt, welche zum Generierungszeitpunkt der Zustandsmeldung in anderen Komponenten vorliegen, sofern solche Zustände vorhanden sind. Ferner werden diejenigen, dem aktuellen Zustand zugewiesenen ursächlichen Zustände ermittelt, aus welchen beim letzten Zustandswechsel, der in einer jeweiligen anderen Komponente aufgetreten ist, vor dem Generierungszeitpunkt der Zustandsmeldung gewechselt wurde, sofern solche ursächlichen Zustände existieren. Für jeden gefundenen ursächlichen Zustand wird ferner die Propagationszeit zwischen dem Auftreten des jeweiligen ursächlichen Zustands und dem Generierungszeitpunkt der Zustandsmeldung berechnet. Dies ist möglich, da mit den Zustandsmeldungen auch deren Generierungszeitpunkt erfasst wird.

In einem Schritt b) des erfindungsgemäßen Verfahrens werden aus den ursächlichen Zuständen, die in Schritt a) für die jeweilige Komponente ermittelt wurden, Gruppen gebildet. Eine jeweilige Gruppe zeichnet sich dadurch aus, dass darin alle ursächlichen Zustände zumindest das gemeinsame Merkmal aufweisen, dass sie für den gleichen aktuellen Zustand (aus unterschiedlichen Zustandsmeldungen) in der jeweiligen Komponente ermittelt wurden. Gegebenenfalls können die ursächlichen Zustände in der Gruppe auch noch weitere Gemeinsamkeiten aufweisen, z.B. kann es sich bei den Zuständen in einer Gruppe auch immer nur um die gleichen ursächlichen Zustände handeln.

In einem Schritt c) werden schließlich aus den Propagationszeiten, die zu den ursächlichen Zuständen der gleichen Gruppe gehören, ein oder mehrere statistische Parameter ermittelt und gespeichert. Diese Parameter können anschließend in geeigneter Weise im Rahmen einer Root-Cause-Analyse verarbeitet werden, wobei die Root-Cause-Analyse nicht Bestandteil des erfindungsgemäßen Verfahrens ist.

Das erfindungsgemäße Verfahren zeichnet sich dadurch aus, dass durch geeignete Gruppierung von ursächlichen Zuständen mit entsprechenden Propagationszeiten auf einfache Weise statistische Parameter ermittelt werden, die einer Root-Cause-Analyse bereitgestellt werden können. Es werden dabei die im Normalbetrieb erzeugten Zustandsmeldungen verarbeitet, ohne dass aktiv bestimmte Betriebszustände herbeigeführt werden müssen. Die statistischen Parameter stammen ferner aus dem Realbetrieb der betrachteten Automatisierungsanlage und werden nicht aus einer digitalen Anlagenspezifikation abgeleitet.

Die Zustände der jeweiligen Komponente der Automatisierungsanlage können je nach Ausgestaltung des erfindungsgemäßen Verfahrens unterschiedlich festgelegt sein. In einer bevorzugten Variante umfassen die Zustände einen oder mehrere der folgenden Zustände:
- einen Zustand, der den Normalbetrieb der jeweiligen Komponente der Automatisierungsanlage anzeigt;
- einen Zustand, der anzeigt, dass die jeweilige Komponente nicht ausreichend mit Material versorgt wird;
- einen Zustand, der anzeigt, dass eine Blockade an einem Ausgang der jeweiligen Komponente vorliegt;
- einen Zustand, der anzeigt, dass ein interner Fehler in der jeweiligen Komponente aufgetreten ist.

Im erfindungsgemäßen Verfahren werden als Propagationszeiten die Zeiten zwischen dem Auftreten des jeweiligen ursächlichen Zustands und dem Generierungszeitpunkt der entsprechenden Zustandsmeldung verarbeitet. In einer bevorzugten Variante werden zusätzlich als weitere Propagationszeiten die Zeitspannen zwischen der Beendigung eines ursächlichen Zustands und dem Generierungszeitpunkt der entsprechenden Zustandsmeldung verarbeitet. Um dies zu erreichen, werden die nachfolgenden Schritte d) bis f) durchgeführt.

In einem Schritt d) werden für eine Vielzahl von durch die jeweilige Komponente generierten Zustandsmeldungen jeweils basierend auf der Musterbeschreibung für den aktuellen Zustand in der generierten Zustandsmeldung diejenigen, dem aktuellen Zustand zugewiesenen ursächlichen Zustände (sofern vorhanden) ermittelt, aus welchen beim letzten Zustandswechsel, der in einer jeweiligen anderen Komponente aufgetreten ist, vor dem Generierungszeitpunkt der Zustandsmeldung gewechselt wurde. Für jeden ursächlichen Zustand wird dabei die weitere Propagationszeit zwischen der Beendigung des jeweiligen ursächlichen Zustands und dem Generierungszeitpunkt der Zustandsmeldung berechnet.

In einem Schritt e) werden aus den ursächlichen Zuständen, die in Schritt d) für die jeweilige Komponente ermittelt wurden, weitere Gruppen gebildet, wobei in einer jeweiligen weiteren Gruppe alle ursächlichen Zustände zumindest das gemeinsame Merkmal aufweisen, dass sie für den gleichen aktuellen Zeitpunkt (aus unterschiedlichen Zustandsmeldungen) in der jeweiligen Komponente ermittelt wurden. Im Unterschied zu den obigen Gruppen sind die weiteren Gruppen nunmehr nicht für die Propagationszeit zwischen dem Auftreten des jeweiligen ursächlichen Zustands und dem Generierungszeitpunkt der Zustandsmeldung definiert, sondern für die weitere Propagationszeit zwischen der Beendigung des jeweiligen ursächlichen Zustands und dem Generierungszeitpunkt der Zustandsmeldung.

In einem Schritt f) werden schließlich aus den weiteren Propagationszeiten, die zu den ursächlichen Zuständen der gleichen weiteren Gruppe gehören, ein oder mehrere statistische Parameter ermittelt.

Je nach Ausgestaltung des erfindungsgemäßen Verfahrens können die oben genannten statistischen Parameter unterschiedlich festgelegt sein. In einer besonders bevorzugten Ausführungsform umfassen der oder die statistischen Parameter den Minimalwert und den Maximalwert der Propagationszeiten in der jeweiligen Gruppe, wobei die Propagationszeiten ggf. auch die oben definierten weiteren Propagationszeiten in einer jeweiligen weiteren Gruppe darstellen können. Diese Parameter haben einen hohen Aussagegehalt im Hinblick auf mögliche Fehlerpropagationen in der Automatisierungsanlage. Alternativ oder zusätzlich können der oder die statistischen Parameter auch die Häufigkeitsverteilung der Propagationszeiten in der jeweiligen Gruppe umfassen, wobei die Propagationszeiten ggf. auch die oben definierten weiteren Propagationszeiten in einer jeweiligen weiteren Gruppe darstellen können.

In einer weiteren bevorzugten Ausführungsform umfassen der oder die statistischen Parameter einen ersten Quantilwert, gemäß dem die Propagationszeiten eines vorbestimmten prozentualen Anteils der oben genannten Häufigkeitsverteilung unterhalb des ersten Quantilwerts liegen. Alternativ oder zusätzlich können der oder die statistischen Parameter einen zweiten Quantilwert umfassen, gemäß dem die Propagationszeiten eines vorgegebenen prozentualen Anteils der Häufigkeitsverteilung oberhalb des zweiten Quantilwerts liegen. Mit dieser Variante wird eine probabilistische Beschreibung entsprechender Extremwerte der Propagationszeiten erreicht.

In einer weiteren Variante des erfindungsgemäßen Verfahrens wird die oben genannte Häufigkeitsverteilung mit einer Gaußverteilung approximiert, wobei der Mittelwert und die Standardabweichung der Gaußverteilung als statistische Parameter ermittelt werden. Basierend auf einer solchen Gaußverteilung können in einer nachfolgenden Root-Cause-Analyse solche ursächlichen Zustände ermittelt werden, deren Propagationszeiten stark vom Mittelwert der Gaußverteilung abweichen. Es wird dabei davon ausgegangen, dass diese Zustände "falsche ursächliche Zustände" sind, welche keine Ursache für den entsprechenden Zustand in der jeweiligen Komponente sind.

In einer weiteren Ausgestaltung werden im obigen Schritt a) und/oder im obigen Schritt d) nur solche ursächlichen Zustände ermittelt, welche weniger als eine vorbestimmte Zeitschwelle vor dem Generierungszeitpunkt der entsprechenden Zustandsmeldung liegen. Auf diese Weise kann die Anzahl von aufgefundenen "falschen ursächlichen Zuständen" reduziert werden, d.h. von solchen Zuständen, welche keine Ursache für den aktuellen Zustand der jeweiligen Komponente sind.

In einer weiteren bevorzugten Ausgestaltung, bei welcher das erfindungsgemäße Verfahren während der Ausführung des automatisierten Prozesses durchgeführt wird, werden bis zu einem vorgegebenen Zeitpunkt nach Beginn des automatisierten Prozesses der oder die im Schritt c) und/oder Schritt f) ermittelten statistischen Parameter mit statistischen Parametern kombiniert, die für einen anderen automatisierten Prozess der Automatisierungsanlage vorher bestimmt wurden, wobei diese Kombination gespeichert wird. Vorzugsweise handelt es sich bei dem anderen automatisierten Prozess um einen Prozess, mit dem das gleiche oder ein ähnliches Produkt bearbeitet bzw. hergestellt wurde. Diese Ausführungsform beruht auf der Erkenntnis, dass zu Beginn des Verfahrens noch nicht ausreichend Parameter für eine Root-Cause-Analyse vorliegen, so dass auf frühere Prozesse zurückgegriffen wird. In einer bevorzugten Variante ist die Kombination eine gewichtete Summe der entsprechenden statistischen Parameter. Vorzugsweise nimmt die Gewichtung der vorher bestimmten statistischen Parameter in der Kombination mit zunehmender Verringerung des zeitlichen Abstands zum vorgegebenen Zeitpunkt ab.

In einer weiteren bevorzugten Ausführungsform wird der zeitliche Verlauf von Zustandswechseln in den Komponenten der Automatisierungsanlage vor Durchführung des Schritts a) bzw. des Schritts d) vorverarbeitet. Dabei werden Zustände, welche verdecken, dass ein vor dem letzten Zustandswechsel vorhandener Zustand in der entsprechenden Komponente noch vorhanden ist, aus dem zeitlichen Verlauf entfernt.

Das erfindungsgemäße Verfahren kann für beliebige Automatisierungsanlagen, z.B. im Bereich der Fertigungs- oder Prozessautomatisierung, zum Einsatz kommen. Vorzugsweise handelt es sich bei der Automatisierungsanlage um eine Anlage zur Herstellung und/oder Bearbeitung eines Produkts, insbesondere um eine Befüll- und/oder Verpackungsanlage.

Neben dem oben beschriebenen Verfahren betrifft die Erfindung eine Vorrichtung zum rechnergestützten Verarbeiten von Zustandsmeldung in einer Automatisierungsanlage, wobei die Vorrichtung zur Durchführung des erfindungsgemäßen Verfahrens bzw. einer oder mehrerer bevorzugter Varianten des erfindungsgemäßen Verfahrens eingerichtet ist.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Ausführungsformen des erfindungsgemäßen Verfahrens, wenn der Programmcode auf einem Computer ausgeführt wird.

Die Erfindung betrifft ferner ein Computerprogramm mit einem Programmcode zur Durchführung des erfindungsgemäßen Verfahrens bzw. einer oder mehrerer bevorzugter Ausführungsformen des erfindungsgemäßen Verfahrens, wenn der Programmcode auf einem Computer ausgeführt wird.

Ein Ausführungsbeispiel der Erfindung wird nachfolgend anhand der beigefügten Figuren detailliert beschrieben.

Es zeigen:
- Fig. 1: eine schematische Darstellung des Ablaufs einer Ausführungsform des erfindungsgemäßen Verfahrens; und
- Fig. 2: eine schematische Darstellung einer optionalen Erweiterung, die in dem Verfahren der Fig. 1 zum Einsatz kommen kann.

Im Folgenden wird eine Ausführungsform des erfindungsgemäßen Verfahrens anhand einer Automatisierungsanlage in der Form einer Abfüllanlage erläutert. Mit dieser Abfüllanlage wird ein automatisierter Prozess zur Befüllung von Flaschen mit Flüssigkeit durchgeführt. Nichtsdestotrotz ist die Erfindung auch für beliebige andere Automatisierungsanlagen verwendbar, mit denen ein Prozess automatisiert durchgeführt wird. Beispielsweise kann die Erfindung auch in Verpackungsanlagen oder anderen Anlage zur Herstellung bzw. Verarbeitung eines Produkts zum Einsatz kommen.

Das Ziel des nachfolgend beschriebenen Verfahrens besteht darin, im Rahmen der Ausführung des automatisierten Prozesses statistische Zeitparametern im Zusammenhang mit der Propagation von Zuständen zwischen Komponenten der Anlage zu ermitteln, ohne dass aktiv bestimmte Betriebszustände in der Anlage herbeigeführt werden müssen. Die Komponenten in der Anlage können dabei verschieden definiert sein, insbesondere kann eine einzelne Komponente ein gesamtes Aggregat in der Anlage darstellen. Ebenso ist es möglich, dass die Komponenten kleinere Bestandteile von entsprechenden Aggregaten sind. Die ermittelten statistischen Parameter können in geeigneter Weise in einer Root-Cause-Analyse verarbeitet werden, um das Zusammenwirken zwischen Komponenten in der Anlage bei Auftreten von abnormalen Betriebszuständen zu analysieren. Die Root-Cause-Analyse ist nicht Bestandteil des erfindungsgemäßen Verfahrens. Vielmehr stellt das erfindungsgemäße Verfahren geeignete statistische Parameter bereit, die im Rahmen einer Root-Cause-Analyse verarbeitet werden können.

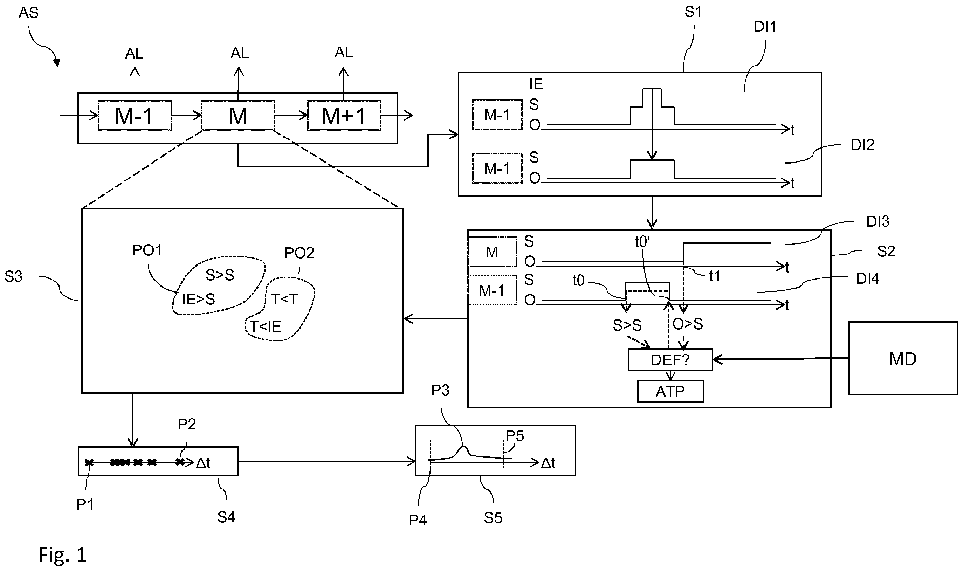

Ausgangspunkt des hier beschriebenen Verfahrens ist eine Automatisierungsanlage, die in Fig. 1 mit Bezugszeichen AS bezeichnet ist. Lediglich ausschnittsweise sind drei Komponenten der Automatisierungsanlage gezeigt, nämlich die Komponente M-1, die Komponente M und die Komponente M+1. Über die Pfeile zwischen den Komponenten wird die Materialflussrichtung, im vorliegenden Fall der Transport der zu befüllenden Flaschen durch die Abfüllanlage, repräsentiert. Für die Anlage AS existiert eine digitale strukturelle Anlagenbeschreibung, welche die logische Anordnung sowie Verbindungen zwischen den Komponenten in der Anlage unter Berücksichtigung der Materialflussrichtung im Normalbetrieb definiert. Die strukturelle Anlagenbeschreibung kann beispielsweise aus den Planungsunterlagen der Automatisierungsanlage abgeleitet sein.

Im Rahmen der Ausführung des für die Automatisierungsanlage AS bestimmten automatisierten Prozesses werden statistische Parameter beispielhaft für jede einzelne Komponente ermittelt. Im Folgenden wird das Verfahren der Ermittlung dieser statistischen Parameter anhand der dargestellten Anlagenkomponente M erläutert. Bei der Ausführung des automatisierten Prozesses erzeugen die einzelnen Komponenten sog. Alarmmeldungen AL. Diese Alarmmeldungen entsprechen Zustandsmeldungen im Sinne der Patentansprüche und werden immer dann erzeugt, wenn der Zustand in einer Komponente der Automatisierungsanlage wechselt. Die Alarmmeldungen werden zusammen mit ihren Generierungszeitpunkten gespeichert, um hieraus anschließend die statistischen Parameter abzuleiten.

Es werden folgende Zustände in der Automatisierungsanlage betrachtet:
- der Zustand O, der einem Normalbetriebszustand der entsprechenden Komponente entspricht;
- der Zustand S (S = Starvation), der einen Stillstand der entsprechenden Komponente aufgrund mangelnder Materialversorgung im Materialfluss beschreibt;
- der Zustand T (T = Tailback), der eine Blockade an einem Ausgang der entsprechenden Komponenten im Materialfluss darstellt;
- der Zustand IE (IE = Internal Error), der durch einen internen Fehler in der entsprechenden Komponente verursacht ist.

In der hier beschriebenen Ausführungsform existiert für jede einzelne Anlagenkomponente ferner eine sog. Musterbeschreibung MD, die basierend auf Vorwissen über den durchgeführten automatisierten Prozess erstellt wurde und im Rahmen des hier beschriebenen Verfahrens verarbeitet wird. Die Erstellung entsprechender Musterbeschreibungen ist dabei nicht Bestandteil des erfindungsgemäßen Verfahrens, sondern die Musterbeschreibungen wurden vorab ermittelt und stellen Eingangsparameter des Verfahrens dar. Die Musterbeschreibung gibt für die hier betrachtete Komponente M die mögliche Ursache für einen jeweiligen Zustand dieser Komponente an. Für die Komponente M ist die Musterbeschreibung MD durch folgende Tabelle gegeben:

| Ursache | Wirkung |
|---|---|
| Internal Error (M-1) | Starvation (M) |
| Starvation (M-1) | Starvation (M) |
| Internal Error (M+1) | Tailback (M) |
| Tailback (M+1) | Tailback (M) |

Wie man aus obiger Tabelle erkennt, kann eine mangelnde Materialversorgung (Starvation) in der Komponente M entweder durch einen internen Fehler I in der Komponente M-1 oder durch eine mangelnde Materialversorgung in der Komponente M-1 verursacht sein. Eine Blockade (Tailback) in der Komponente M kann durch einen internen Fehler in der Komponente M+1 oder durch eine Blockade in der Komponente M+1 verursacht sein.

Bevor die Musterbeschreibung MD im Verfahren der Fig. 1 verarbeitet wird, findet zunächst eine Vorverarbeitung des Zeitverlaufs der in den einzelnen Komponenten aufgetretenen Zustandswechsel statt. Diese Vorverarbeitung erfolgt in Schritt S1 und dient dazu, Zustände aus dem Zeitverlauf herauszufiltern, welche andere, bereits vorher vorhandene Zustände maskieren und somit die tatsächliche Ursache von Zuständen in anderen Komponenten verdecken. Beispielhaft ist diese Vorverarbeitung in Fig. 1 anhand der Komponente M-1 angedeutet. Das Diagramm DI1 zeigt den ursprünglichen Zeitverlauf eines Zustandswechsels. Entlang der Abszisse ist dabei die Zeit t und entlang der Ordinate die Zustände O (Normalbetrieb), S (Starvation) und IE (Internal Error) angegeben. Wie man erkennt, wird aus dem Normalbetriebszustand O zunächst in den Zustand Starvation S gewechselt. Während dieser Zustand vorhanden ist, tritt zusätzlich der Zustand eines internen Fehlers IE auf. Da der Zustand S noch besteht, verdeckt der Zustand IE den Zustand S. Demzufolge wird gemäß dem Schritt S1 der Zustand IE herausgefiltert, was zu dem korrigierten Zeitverlauf gemäß dem Diagramm DI2 führt. Gemäß diesem Zeitverlauf wurde der Zustand IE entfernt, so dass ersichtlich wird, dass der Zustand S während des gesamten Zeitraums zwischen dem Wechsel aus dem Zustand O und dem Wechsel zurück in den Zustand O vorhanden war.

Basierend auf den korrigierten Zeitverläufen werden anschließend in Schritt S2 die Zustände der in der Komponente M aufgetretenen Alarmmeldungen mittels der Musterbeschreibung MD ursächlichen Zuständen zugeordnet. Beispielhaft zeigt Fig. 1 ein Szenario, bei dem die Komponente M zum Zeitpunkt t1 vom Normalbetriebszustand O in den Betriebszustand S einer mangelnden Materialversorgung gewechselt hat (Diagramm DI3). Die entsprechende Alarmmeldung mit dem Generierungszeitpunkt dieses Zustandswechsels wurde erfasst.

Anschließend wird ermittelt, in welchem Zustand sich die Komponente M-1 zum Zeitpunkt t1 befunden hat. Wie sich aus dem Diagramm DI4 ergibt, befindet sich die Komponente M-1 zu dem Zeitpunkt t1 im Normalbetriebszustand O. Als nächstes wird überprüft, ob in der Musterbeschreibung MD ein Muster definiert ist, für das der Betriebszustand O der Komponente M-1 die Ursache für den Betriebszustand S der Komponente M ist. Dies wird durch den Schritt "DEF?" wiedergegeben. Das gerade genannte Muster wird in Fig. 1 durch die Notation O > S spezifiziert. Diese Notation gilt allgemein für entsprechende Muster in der Form von Zeilen in der obigen Tabelle, wobei in der Notation der Pfeil gemäß dem >/<-Zeichen immer von der Ursache hin zur Wirkung zeigt. Ferner bezieht sich ein Zustand, der eine Ursache darstellt und links von dem Zustand der Wirkung (d.h. dem Zustand M) in der Notation steht, auf die Komponente M-1, wohingegen sich ein Zustand, der eine Ursache darstellt und rechts von dem Zustand der Wirkung in der Notation steht, auf die Komponente M+1 bezieht.

Gemäß dem Szenario der Fig. 1 kommt man zu dem Ergebnis, dass das Muster O > S nicht in der Musterbeschreibung MD enthalten ist. Als Nächstes wird nach dem Zustand der Komponente M-1 gesucht, aus dem zuletzt gewechselt wurde. Dies ist gemäß dem Diagramm DI4 der Zustand S. Dieser Zustand wurde zum Zeitpunkt t0' beendet, wohingegen zum Zeitpunkt t0 in diesen Zustand gewechselt wurde. Für den Zustand S wird nunmehr wiederum in der Musterbeschreibung MD danach gesucht, ob dieser Zustand ursächlich für den Zustand S zum Zeitpunkt t1 in der Komponente M sein kann, d.h. ob das Muster S > S in der obigen Tabelle existiert. Da dies der Fall ist (zweite Zeile nach der Spaltenbezeichnung in der obigen Tabelle), wird dieses Muster einem entsprechenden Pool bzw. einer entsprechenden Gruppe zugeordnet, wie durch das Bezugszeichen ATP angedeutet ist (ATP = Add To Pool).

Auf diese Weise werden mehrere Pools von Mustern gebildet. Ein Pool zeichnet sich dabei dadurch aus, dass alle Wirkungen des entsprechenden Musters den gleichen Zustand der Komponente M repräsentieren. Für ein jeweiliges, einem Pool hinzugefügten Muster wird darüber hinaus die Propagationszeit zwischen dem Auftreten des Zustands der Ursache bis zum Auftreten des Zustands der Wirkung erfasst, d.h. es wird die Zeit Δt = t1 - t0 bestimmt. Es existieren somit mehrere Pools mit entsprechenden Mustern und darin enthaltenen Propagationszeiten, welche die Propagation der ursächlichen Zustände zu den bewirkten Zuständen repräsentieren. In der hier beschriebenen Ausführungsform werden die Zeitpunkte t0', zu denen ein ursächlicher Zustand wieder verlassen wurde, nicht verarbeitet. In einer optionalen Variante der Erfindung können jedoch für solche ursächlichen Zustände, die vor dem Auftreten des bewirkten Zustands beendet wurden, auch die Propagationszeiten zwischen der Beendigung des ursächlichen Zustands und des Auftreten des bewirkten Zustands (d.h. t1 - t0') als weitere Propagationszeiten erfasst werden und entsprechende Pools mit diesen weiteren Propagationszeiten gebildet werden.

Die Bildung der oben beschriebenen Pools ist beispielhaft in Fig. 1 in Schritt S3 angedeutet. Es existieren dabei nur Pools für solche Muster, die auch in der Musterbeschreibung MD gemäß der obigen Tabelle enthalten sind. Wie man erkennt, existiert ein Pool PO1 für bewirkte Zustände S, welche ihre Ursache in Zuständen in der Komponente M-1 haben können (die ersten beiden Zeilen nach der Spaltenbezeichnung in der obigen Tabelle). Ferner existiert ein Pool PO2 für Zustände T, die ihre Ursache in Zuständen in der Komponente M+1 haben können (dritte und vierte Zeile nach der Spaltenbezeichnung in der obigen Tabelle).

Für jeden Pool werden nunmehr die Propagationszeiten Δt der einzelnen darin enthaltenen Muster einer statistischen Analyse unterzogen. Eine einfache Variante dieser statistischen Analyse ist durch Schritt S4 angedeutet. Gemäß diesem Schritt werden als statistische Parameter der Minimalwert P1 und der Maximalwert P2 der Propagationszeiten Δt in jedem Pool ermittelt. Bei diesen Extremwerten handelt es sich um wichtige Größen, welche im Rahmen einer Root-Cause-Analyse verarbeitet werden können.

Darüber hinaus können auch noch weitere statistische Parameter aus den entsprechenden Propagationszeiten eines jeweiligen Pools extrahiert werden, was in Fig. 1 durch den Schritt S5 angedeutet ist. Gemäß diesem Schritt wird die Häufigkeitsverteilung der Propagationszeiten Δt im entsprechenden Pool als weiterer statistischer Parameter P3 bestimmt. Darüber hinaus werden Extremwerte dieser Häufigkeitsverteilung in geeigneter Weise über Quantile abgeschätzt. Der Wert entsprechender Quantile ist in Fig. 1 durch die beiden Parameter P4 und P5 gegeben. Jedem Quantilwert P4 und P5 ist ein prozentualer Anteil zugeordnet. Der Quantilwert P4 gibt dabei an, dass die Propagationszeiten des zugeordneten prozentualen Anteils der Häufigkeitsverteilung P3 unterhalb des Quantilwerts P4 liegen. Demgegenüber gibt der Quantilwert P5 an, dass die Propagationszeiten des zugeordneten prozentualen Anteils der Häufigkeitsverteilung größer als der Quantilwert P5 sind. Die prozentuellen Anteile können je nach Ausgestaltung des erfindungsgemäßen Verfahrens geeignet definiert werden und ermöglichen eine probabilistische Beschreibung entsprechender Extremwerte der Propagationszeiten.

Im Vorangegangenen wurde eine Ausführungsform der Erfindung anhand eines Prozesses mit eindeutiger Beziehung der Komponenten zueinander basierend auf dem Materialfluss beschrieben. Nichtsdestotrotz kann das Verfahren auch für Prozesse in solchen Automatisierungsanlagen zum Einsatz kommen, bei denen Verzweigungen hin zu mehreren unterschiedlichen Komponenten ausgehend von einer Komponente auftreten können.

Dabei kann unter Umständen das Problem auftreten, dass für einen bewirkten Zustand mehrere mögliche Ursachen in der Form von mehreren aufgetretenen Mustern in der entsprechenden Musterbeschreibung gefunden werden. In diesem Fall sollten Mechanismen vorgesehen werden, welche dazu führen, dass möglichst wenig falsche, nicht für den bewirkten Zustand ursächliche Zustände gefunden werden, bzw. welche es ermöglichen, falsche Muster zu erkennen. Dies kann beispielsweise dadurch erreicht werden, dass ein maximaler Zeithorizont für die Suche nach ursächlichen Zuständen vorgegeben wird, d.h. es wird nur eine vorgegebene Zeitspanne zurück in die Vergangenheit ausgehend von einer aufgetretenen Alarmmeldung nach ursächlichen Zuständen gesucht. Hierdurch kann der Anteil von falschen Mustern ohne kausalen Zusammenhang zur aktuellen Alarmmeldung vermindert werden.

In einer weiteren Variante wird ferner die ermittelte Häufigkeitsverteilung P3 mit einer Gaußverteilung approximiert. Die Parameter dieser Gaußverteilung in der Form von Mittelwert und Standardabweichung werden gespeichert. Man geht dabei davon aus, dass Muster, die tatsächlich einen kausalen Zusammenhang repräsentieren, einer Gaußverteilung folgen und sich um den Mittelwert der Gaußverteilung gruppieren. In diesem Fall können falsche Muster dann im Rahmen der nachgeschalteten Root-Cause-Analyse dadurch identifiziert werden, dass sie von dem Mittelwert der approximierten Gaußverteilung über ein vorbestimmtes Maß hinaus abweichen.

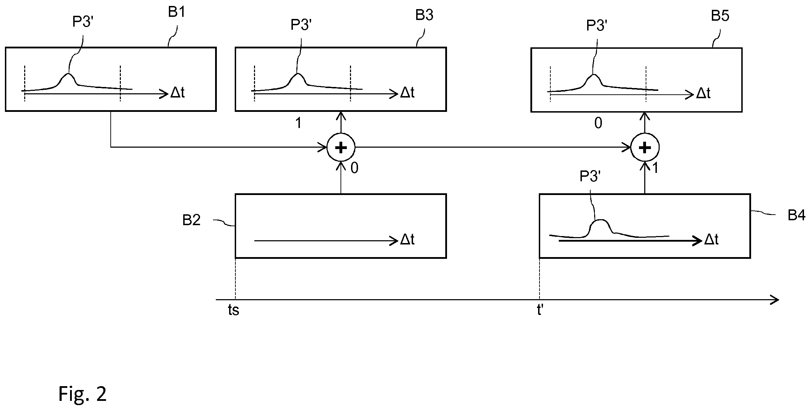

Fig. 2 zeigt eine optionale Erweiterung des Verfahrens der Fig. 1. Bei dieser Erweiterung wird die Tatsache berücksichtigt, dass zu Beginn der Ausführung des automatisierten Prozesses zum Zeitpunkt ts noch keine Alarmmeldungen vorliegen, die geeignet zur Extraktion von statistischen Parametern genutzt werden können. Demzufolge wird in der Variante der Fig. 2 ein früherer Prozess berücksichtigt, der mit der Automatisierungsanlage AS ausgeführt wurde. Vorzugsweise handelt es sich dabei um einen Prozess, der dem zum Zeitpunkt ts gestarteten Prozess entspricht oder mit dem ein ähnliches Produkt verarbeitet wurde. Beispielsweise kann es sich im Falle einer Abfüllanlage um einen Prozess handeln, mit dem Flaschen mit einer Größe befüllt wurden, die mit der Größe der Flaschen vergleichbar ist, die in dem zum Zeitpunkt ts gestarteten Prozess befüllt werden.

Gemäß Fig. 2 existieren zu dem früheren Prozess bereits entsprechende statistische Parameter, wobei beispielhaft als statistischer Parameter die Häufigkeitsverteilung P3' angegebene ist (siehe Block B1 in Fig. 2). Wie sich aus Block B2 ergibt, existieren zum Zeitpunkt ts noch keine statistischen Parameter für den aktuell gestarteten Prozess. Demzufolge werden zu Beginn der Ausführung des Prozesses die statistischen Parameter P3' des früheren Prozesses von einer entsprechenden Root-Cause-Analyse verarbeitet (siehe Block B3). Dies ist in Fig. 2 durch eine entsprechende Gewichtung angedeutet, wobei das Gewicht des früheren Prozesses den Wert 1 und das Gewicht des aktuellen Prozesses den Wert 0 aufweist.

Mit zunehmender Ausführungszeit des aktuellen Prozesses gibt es immer mehr Alarmmeldungen, welche zu einer entsprechenden Häufigkeitsverteilung P3 führen. Demzufolge wird bis zu einem vorgegebenen Zeitpunkt t' eine gewichtete Kombination der entsprechenden Histogramme P3 und P3' durchgeführt, wobei die Gewichtung des Histogramms P3' von dem Wert 1 bis zum Zeitpunkt t' kontinuierlich abnimmt, da es immer mehr Histogramme für den gerade ausgeführten Prozess gibt. Ab dem Zeitpunkt t' werden nur noch Histogramme P3 des gerade ausgeführten Prozesses berücksichtigt und das Gewicht des Histogramms P3' für den früheren Prozess wird auf 0 gesetzt. Dies ist in Fig. 2 durch die Blöcke B4 und B5 sowie entsprechende Gewichtungsfaktoren an den Blöcken angedeutet.

Die im Vorangegangenen beschriebene Ausführungsform der Erfindung weist eine Reihe von Vorteilen auf. Insbesondere können aus einem normalen Betriebsprozess einer Automatisierungsanlage in geeigneter Weise statistische Zeitparameter ermittelt werden, die anschließend im Rahmen einer Root-Cause-Analyse verarbeitet werden können. Es ist dabei nicht erforderlich, manuelle Zeitmessungen durchzuführen und dediziert bestimmte Betriebszustände in der Automatisierungsanlage einzustellen. Das Verfahren kann vielmehr während des laufenden Betriebs der Anlage ohne Anpassungen an der Anlage durchgeführt werden. Dabei können alle Zustandswechsel, die während des Anlagenbetriebs auftreten, einer Analyse zur Ermittlung von Zeitparametern unterzogen werden. Die statistischen Zeitparameter werden ferner ausschließlich basierend auf Realdaten des Anlagenbetriebs ermittelt und nicht aus der Anlagenspezifikation berechnet. Demzufolge können auch Daten von Anlagen verarbeitet werden, die von der ursprünglichen Anlagenspezifikation abweichen.

In einer speziellen Ausführungsform ist es auch möglich, Zeitparameter höherer Ordnung zu verarbeiten, d.h. nicht nur das Propagationsverhalten in der unmittelbaren Nachbarschaft einer Komponente zu bestimmen, sondern auch über mehrere Komponenten hinweg. In diesem Fall muss lediglich die oben beschriebene Musterbeschreibung geeignet durch weitere ursächliche Zustände für einen jeweiligen bewirkten Zustand der betrachteten Komponente erweitert werden.

## Patentansprüche

1. Verfahren zum rechnergestützten Verarbeiten von Zustandsmeldungen (AL) in einer Automatisierungsanlage (AS), wobei die Zustandsmeldungen (AL) von einer Vielzahl von Komponenten (M-1, M, M+1) bei Ausführung eines automatisierten Prozesses in der Automatisierungsanlage (AS) generiert werden und mit deren Generierungszeitpunkten (t0, t1) erfasst werden, wobei eine Zustandsmeldung (AL) von einer jeweiligen Komponente (M-1, M, M+1) bei einem Wechsel von einem vorhergehenden auf einen neuen Zustand (O, S, T, IE) generiert wird und den neuen Zustand (O, S, T, IE) anzeigt, wobei für eine jeweilige Komponente (M) zumindest eines Teils der Komponenten (M-1, M, M+1) der Automatisierungsanlage (AS) eine Musterbeschreibung (MD) bereitgestellt ist, welche für einen oder mehrere Zustände (O, S, T, IE) in der jeweiligen Komponente (M) jeweils einen oder mehrere ursächliche Zustände (O, S, T, IE) angibt, die dem entsprechenden Zustand (O, S, T, IE) in der jeweiligen Komponente (M) zugewiesen sind, wobei jeder ursächliche Zustand (O, S, T, IE) zu einer anderen Komponente (M-1, M+1) als der jeweiligen Komponente (M) gehört und eine Ursache für den Zustand (O, S, T, IE) in der jeweiligen Komponente (M) sein kann, dem der ursächliche Zustand (O, S, T, IE) zugewiesen ist,
wobei für die jeweilige Komponente (M) folgende Schritte durchgeführt werden:
a) für eine Vielzahl von durch die jeweilige Komponente (M) generierten Zustandsmeldungen (AL) werden jeweils basierend auf der Musterbeschreibung (MD) für den aktuellen Zustand (O, S, T, IE) in der generierten Zustandsmeldung (AL) diejenigen, dem aktuellen Zustand (O, S, T, IE) zugewiesenen ursächlichen Zustände (O, S, T, IE) ermittelt, welche zum Generierungszeitpunkt der Zustandsmeldung (AL) in anderen Komponenten (M-1, M+1) vorliegen, sowie diejenigen, dem aktuellen Zustand (O, S, T, IE) zugewiesenen ursächlichen Zustände (O, S, T, IE), aus welchen beim letzten Zustandswechsel, der in einer jeweiligen anderen Komponente (M-1, M+1) aufgetreten ist, vor dem Generierungszeitpunkt der Zustandsmeldung (AL) gewechselt wurde, wobei für jeden ursächlichen Zustand (O, S, T, IE) die Propagationszeit (Δt) zwischen dem Auftreten des jeweiligen ursächlichen Zustands (O, S, T, IE) und dem Generierungszeitpunkt der Zustandsmeldung (AL) berechnet wird;
b) aus den ursächlichen Zuständen (O, S, T, IE), die in Schritt a) für die jeweilige Komponente (M) ermittelt wurden, werden Gruppen (PO1, PO2) gebildet, wobei in einer jeweiligen Gruppe alle ursächlichen Zustände (O, S, T, IE) zumindest das gemeinsame Merkmal aufweisen, dass sie für den gleichen aktuellen Zustand (O, S, T, IE) in der jeweiligen Komponente ermittelt wurden;
c) aus den Propagationszeiten (Δt), die zu den ursächlichen Zuständen (O, S, T, IE) der gleichen Gruppe (PO1, PO2) gehören, werden ein oder mehrere statistische Parameter (P1, P2, ..., P5) ermittelt und gespeichert.

2. Verfahren nach Anspruch 1, wobei für die jeweilige Komponente (M) ferner folgende Schritte durchgeführt werden:
d) für die Vielzahl von durch die jeweilige Komponente (M) generierten Zustandsmeldungen (AL) werden jeweils basierend auf der Musterbeschreibung (MD) für den aktuellen Zustand (O, S, T, IE) in der generierten Zustandsmeldung (AL) diejenigen, dem aktuellen Zustand (O, S, T, IE) zugewiesenen ursächlichen Zustände (O, S, T, IE) ermittelt, aus welchen beim letzten Zustandswechsel, der in einer jeweiligen anderen Komponente (M-1, M+1) aufgetreten ist, vor dem Generierungszeitpunkt der Zustandsmeldung (AL) gewechselt wurde, wobei für jeden ursächlichen Zustand (O, S, T, IE) eine weitere Propagationszeit (Δt) zwischen der Beendigung des jeweiligen ursächlichen Zustands (O, S, T, IE) und dem Generierungszeitpunkt der Zustandsmeldung (AL) berechnet wird;
e) aus den ursächlichen Zuständen (O, S, T, IE), die in Schritt d) für die jeweilige Komponente ermittelt wurden, werden weitere Gruppen (PO1, PO2) gebildet, wobei in einer jeweiligen weiteren Gruppe (PO1, PO2) alle ursächlichen Zustände (O, S, T, IE) zumindest das gemeinsame Merkmal aufweisen, dass sie für den gleichen aktuellen Zustand (O, S, T, IE) in der jeweiligen Komponente ermittelt wurden;
f) aus den weiteren Propagationszeiten (Δt), die zu den ursächlichen Zuständen (O, S, T, IE) der gleichen weiteren Gruppe (PO1, PO2) gehören, werden ein oder mehrere statistische Parameter (P1, P2, ..., P5) ermittelt.

3. Verfahren nach Anspruch 1 oder 2, wobei der oder die statistischen Parameter (P1, P2, ..., P5) den Minimalwert (P1) und den Maximalwert (P2) der Propagationszeiten (Δt) in der jeweiligen Gruppe (PO1, PO2) umfassen.

4. Verfahren nach einem der vorhergehenden Ansprüche, wobei der oder die statistischen Parameter (P1, P2, ..., P5) die Häufigkeitsverteilung (P3) der Propagationszeiten (Δt) in der jeweiligen Gruppe (PO1, PO2) umfassen.

5. Verfahren nach Anspruch 4, wobei der oder die statistischen Parameter (P1, P2, ..., P5) einen ersten Quantilwert (P4) umfassen, gemäß dem die Propagationszeiten (Δt) eines vorbestimmten prozentualen Anteils der Häufigkeitsverteilung (P3) unterhalb des ersten Quantilwerts (P4) liegen, und/oder der oder die statistischen Parameter (P1, P2, ..., P5) einen zweiten Quantilwert (P5) umfassen, gemäß dem die Propagationszeiten (Δt) eines vorgegebenen prozentualen Anteils der Häufigkeitsverteilung (P3) oberhalb des zweiten Quantilwerts liegt.

6. Verfahren nach Anspruch 4 oder 5, wobei die Häufigkeitsverteilung (P3) mit einer Gaußverteilung approximiert wird und der Mittelwert und die Standardabweichung der Gaußverteilung als statistische Parameter (P1, P2, ..., P5) ermittelt werden.

7. Verfahren nach einem der vorhergehenden Ansprüche, wobei in Schritt a) und/oder Schritt d) nur solche ursächlichen Zustände (O, S, T, IE) ermittelt werden, welche weniger als eine vorbestimmte Zeitschwelle vor dem Generierungszeitpunkt der Zustandsmeldung (AL) liegen.

8. Verfahren nach einem der vorhergehenden Ansprüche, wobei bis zu einem vorgegebenen Zeitpunkt (t') nach Beginn des automatisierten Prozesses der oder die in Schritt c) und/oder Schritt f) ermittelten statistischen Parameter (P1, P2, ..., P5) mit statistischen Parametern kombiniert werden, die für einen anderen automatisierten Prozess der Automatisierungsanlage (AS) vorher bestimmt wurden, wobei die Kombination gespeichert wird, wobei die Kombination vorzugsweise eine gewichtete Summe ist und die Gewichtung der vorher bestimmten statistischen Parameter in der Kombination vorzugsweise mit zunehmender Verringerung des zeitlichen Abstands zum vorgegebenen Zeitpunkt abnimmt.

9. Verfahren nach einem der vorhergehenden Ansprüche, wobei der zeitliche Verlauf von Zustandswechseln in den Komponenten (M-1, M, M+1) der Automatisierungsanlage (As) vor Durchführung des Schritts a) und/oder d) derart vorverarbeitet wird, dass Zustände (O, S, T, IE), welche verdecken, dass ein vor dem letzten Zustandswechsel vorhandener Zustand (O, S, T, IE) in der entsprechenden Komponente (M-1, M+1) noch vorhanden ist, aus dem zeitlichen Verlauf entfernt werden.

10. Verfahren nach einem der vorhergehenden Ansprüche, wobei die Automatisierungsanlage (AS) eine Anlage zur Herstellung und/oder Bearbeitung eines Produkts ist, insbesondere eine Befüll- und/oder Verpackungsanlage.

11. Vorrichtung zum rechnergestützten Verarbeiten von Zustandsmeldungen (AL) in einer Automatisierungsanlage (AS), wobei die Zustandsmeldungen (AL) von einer Vielzahl von Komponenten (M-1, M, M+1) bei Ausführung eines automatisierten Prozesses in der Automatisierungsanlage (AS) generiert werden und mit deren Generierungszeitpunkten (t0, t1) erfasst werden, wobei eine Zustandsmeldung (AL) von einer jeweiligen Komponente (M-1, M, M+1) bei einem Wechsel von einem vorhergehenden auf einen neuen Zustand (O, S, T, IE) generiert wird und den neuen Zustand (O, S, T, IE) anzeigt, wobei für eine jeweilige Komponente (M) zumindest eines Teils der Komponenten (M-1, M, M+1) der Automatisierungsanlage (AS) eine Musterbeschreibung (MD) bereitgestellt ist, welche für einen oder mehrere Zustände (O, S, T, IE) in der jeweiligen Komponente (M) jeweils einen oder mehrere ursächliche Zustände (O, S, T, IE) angibt, die dem entsprechenden Zustand (O, S, T, IE) in der jeweiligen Komponente (M) zugewiesen sind, wobei jeder ursächliche Zustand (O, S, T, IE) zu einer anderen Komponente (M-1, M+1) als der jeweiligen Komponente (M) gehört und eine Ursache für den Zustand (O, S, T, IE) in der jeweiligen Komponente (M) sein kann, dem der ursächliche Zustand (O, S, T, IE) zugewiesen ist,
wobei die Vorrichtung zur Durchführung eines Verfahrens eingerichtet ist, bei dem für die jeweilige Komponente (M) folgende Schritte durchgeführt werden:
a) für eine Vielzahl von durch die jeweilige Komponente (M) generierten Zustandsmeldungen (AL) werden jeweils basierend auf der Musterbeschreibung (MD) für den aktuellen Zustand (O, S, T, IE) in der generierten Zustandsmeldung (AL) diejenigen, dem aktuellen Zustand (O, S, T, IE) zugewiesenen ursächlichen Zustände (O, S, T, IE) ermittelt, welche zum Generierungszeitpunkt der Zustandsmeldung (AL) in anderen Komponenten (M-1, M+1) vorliegen, sowie diejenigen, dem aktuellen Zustand (O, S, T, IE) zugewiesenen ursächlichen Zustände (O, S, T, IE), aus welchen beim letzten Zustandswechsel, der in einer jeweiligen anderen Komponente (M-1, M+1) aufgetreten ist, vor dem Generierungszeitpunkt der Zustandsmeldung (AL) gewechselt wurde, wobei für jeden ursächlichen Zustand (O, S, T, IE) die Propagationszeit (Δt) zwischen dem Auftreten des jeweiligen ursächlichen Zustands (O, S, T, IE) und dem Generierungszeitpunkt der Zustandsmeldung (AL) berechnet wird;
b) aus den ursächlichen Zuständen (O, S, T, IE), die in Schritt a) für die jeweilige Komponente (M) ermittelt wurden, werden Gruppen (PO1, PO2) gebildet, wobei in einer jeweiligen Gruppe alle ursächlichen Zustände (O, S, T, IE) zumindest das gemeinsame Merkmal aufweisen, dass sie für den gleichen aktuellen Zustand (O, S, T, IE) in der jeweiligen Komponente ermittelt wurden;
c) aus den Propagationszeiten (Δt), die zu den ursächlichen Zuständen (O, S, T, IE) der gleichen Gruppe (PO1, PO2) gehören, werden ein oder mehrere statistische Parameter (P1, P2, ..., P5) ermittelt und gespeichert.

12. Vorrichtung nach Anspruch 11, wobei die Vorrichtung zur Durchführung eines Verfahrens nach einem der Ansprüche 2 bis 10 eingerichtet ist.

13. Computerprogrammprodukt mit einem auf einem maschinenlesbaren Träger gespeicherten Programmcode zur Durchführung eines Verfahrens nach einem der Ansprüche 1 bis 10, wenn der Programmcode auf einem Computer ausgeführt wird.

14. Computerprogramm mit einem Programmcode zur Durchführung eines Verfahrens nach einem der Ansprüche 1 bis 10, wenn der Programmcode auf einem Computer ausgeführt wird.

## Claims

1. Method for the computer-aided processing of state notifications (AL) in an automation system (AS), wherein the state notifications (AL) are generated by a multiplicity of components (M-1, M, M+1) during execution of an automated process in the automation system (AS) and are acquired with their generation times (t0, t1), wherein a state notification (AL) is generated by a respective component (M-1, M, M+1) upon a change from a previous to a new state (O, S, T, IE) and displays the new state (O, S, T, IE), wherein a pattern description (MD) is provided for a respective component (M) of at least some of the components (M-1, M, M+1) of the automation system (AS), which pattern description indicates in each case one or more causative states (O, S, T, IE) for one or more states (O, S, T, IE) in the respective component (M), which causative states are assigned to the corresponding state (O, S, T, IE) in the respective component (M), wherein each causative state (O, S, T, IE) belongs to a component (M-1, M+1) other than the respective component (M) and may be a cause for the state (O, S, T, IE) in the respective component (M) to which the causative state (O, S, T, IE) is assigned, wherein the following steps are performed for the respective component (M):
a) for a multiplicity of state notifications (AL) generated by the respective component (M), in each case based on the pattern description (MD) for the current state (O, S, T, IE) in the generated state notification (AL), those causative states (O, S, T, IE) that are assigned to the current state (O, S, T, IE) and that are present in other components (M-1, M+1) at the generation time of the state notification (AL) are ascertained, along with those causative states (O, S, T, IE) that are assigned to the current state (O, S, T, IE) and from which there was a change in the last state change that occurred in a respective other component (M-1, M+1) before the generation time of the state notification (AL), wherein, for each causative state (O, S, T, IE), the propagation time (Δt) between the occurrence of the respective causative state (O, S, T, IE) and the generation time of the state notification (AL) is calculated;
b) groups (PO1, PO2) are formed from the causative states (O, S, T, IE) that were ascertained in step a) for the respective component (M), wherein all causative states (O, S, T, IE) in a respective group have at least the common feature whereby they were ascertained for the same current state (O, S, T, IE) in the respective component;
c) one or more statistical parameters (P1, P2, ..., P5) are ascertained from the propagation times (Δt) that belong to the causative states (O, S, T, IE) of the same group (PO1, PO2) and stored.

2. Method according to Claim 1, wherein the following steps are furthermore performed for the respective component (M):
d) for the multiplicity of state notifications (AL) generated by the respective component (M), in each case based on the pattern description (MD) for the current state (O, S, T, IE) in the generated state notification (AL), those causative states (O, S, T, IE) that are assigned to the current state (O, S, T, IE) and from which there was a change in the last state change that occurred in a respective other component (M-1, M+1) before the generation time of the state notification (AL) are ascertained, wherein, for each causative state (O, S, T, IE), a further propagation time (Δt) between the end of the respective causative state (O, S, T, IE) and the generation time of the state notification (AL) is calculated;
e) further groups (PO1, PO2) are formed from the causative states (O, S, T, IE) that were ascertained in step d) for the respective component, wherein all causative states (O, S, T, IE) in a respective further group (PO1, PO2) have at least the common feature whereby they were ascertained for the same current state (O, S, T, IE) in the respective component;
f) one or more further statistical parameters (P1, P2, ..., P5) are ascertained from the further propagation times (Δt) that belong to the causative states (O, S, T, IE) of the same further group (PO1, PO2).

3. Method according to Claim 1 or 2, wherein the one or more statistical parameters (P1, P2, ..., P5) comprise the minimum value (P1) and the maximum value (P2) of the propagation times (Δt) in the respective group (PO1, PO2).

4. Method according to one of the preceding claims, wherein the one or more statistical parameters (P1, P2, ..., P5) comprise the frequency distribution (P3) of the propagation times (Δt) in the respective group (PO1, PO2).

5. Method according to Claim 4, wherein the one or more statistical parameters (P1, P2, ..., P5) comprise a first quantile value (P4) according to which the propagation times (Δt) of a predetermined percentage of the frequency distribution (P3) lie below the first quantile value (P4) and/or the one or more statistical parameters (P1, P2, ..., P5) comprise a second quantile value (P5) according to which the propagation times (Δt) of a predefined percentage of the frequency distribution (P3) lie above the second quantile value.

6. Method according to Claim 4 or 5, wherein the frequency distribution (P3) is approximated to a Gaussian distribution and the mean and the standard deviation of the Gaussian distribution are ascertained as statistical parameters (P1, P2, ..., P5).

7. Method according to one of the preceding claims, wherein, in step a) and/or step d), only causative states (O, S, T, IE) that lie less than a predetermined time threshold before the generation time of the state notification (AL) are ascertained.

8. Method according to one of the preceding claims, wherein, up to a predefined time (t') after the beginning of the automated process, the one or more statistical parameters (P1, P2, ..., P5) ascertained in step c) and/or step f) are combined with statistical parameters that were determined previously for another automated process of the automation system (AS), wherein the combination is stored, wherein the combination is preferably a weighted sum and the weighting of the previously determined statistical parameters in the combination preferably decreases as the reduction in the time difference from the predefined time increases.

9. Method according to one of the preceding claims, wherein the chronological sequence of state changes in the components (M-1, M, M+1) of the automation system (AS) is preprocessed before performing step a) and/or d) such that states (O, S, T, IE) that conceal the fact that a state (O, S, T, IE) present before the last state change is still present in the corresponding component (M-1, M+1) are removed from the chronological sequence.

10. Method according to one of the preceding claims, wherein the automation system (AS) is a system for producing and/or processing a product, in particular a filling and/or packaging system.

11. Device for the computer-aided processing of state notifications (AL) in an automation system (AS), wherein the state notifications (AL) are generated by a multiplicity of components (M-1, M, M+1) during execution of an automated process in the automation system (AS) and are acquired with their generation times (t0, t1), wherein a state notification (AL) is generated by a respective component (M-1, M, M+1) upon a change from a previous to a new state (O, S, T, IE) and displays the new state (O, S, T, IE), wherein a pattern description (MD) is provided for a respective component (M) of at least some of the components (M-1, M, M+1) of the automation system (AS), which pattern description indicates in each case one or more causative states (O, S, T, IE) for one or more states (O, S, T, IE) in the respective component (M), which causative states are assigned to the corresponding state (O, S, T, IE) in the respective component (M), wherein each causative state (O, S, T, IE) belongs to a component (M-1, M+1) other than the respective component (M) and may be a cause for the state (O, S, T, IE) in the respective component (M) to which the causative state (O, S, T, IE) is assigned, wherein the device is designed to perform a method in which the following steps are performed for the respective component (M) :
a) for a multiplicity of state notifications (AL) generated by the respective component (M), in each case based on the pattern description (MD) for the current state (O, S, T, IE) in the generated state notification (AL), those causative states (O, S, T, IE) that are assigned to the current state (O, S, T, IE) and that are present in other components (M-1, M+1) at the generation time of the state notification (AL) are ascertained, along with those causative states (O, S, T, IE) that are assigned to the current state (O, S, T, IE) and from which there was a change in the last state change that occurred in a respective other component (M-1, M+1) before the generation time of the state notification (AL), wherein, for each causative state (O, S, T, IE), the propagation time (Δt) between the occurrence of the respective causative state (O, S, T, IE) and the generation time of the state notification (AL) is calculated;
b) groups (PO1, PO2) are formed from the causative states (O, S, T, IE) that were ascertained in step a) for the respective component (M), wherein all causative states (O, S, T, IE) in a respective group have at least the common feature whereby they were ascertained for the same current state (O, S, T, IE) in the respective component;
c) one or more statistical parameters (P1, P2, ..., P5) are ascertained from the propagation times (Δt) that belong to the causative states (O, S, T, IE) of the same group (PO1, PO2) and stored.

12. Device according to Claim 11, wherein the device is designed to perform a method according to one of Claims 2 to 10.

13. Computer program product containing a program code, stored on a machine-readable carrier, for performing a method according to one of Claims 1 to 10 when the program code is executed on a computer.

14. Computer program containing a program code for performing a method according to one of Claims 1 to 10 when the program code is executed on a computer.

## Revendications

1. Procédé de traitement assisté par ordinateur de messages d'état (AL) dans une installation d'automatisation (AS), dans lequel les messages d'état (AL) sont générés par une pluralité de composantes (M-1, M, M+1) lors de l'exécution d'un procédé automatisé dans l'installation d'automatisation (AS) et avec lesquels des temps de génération (t0, t1) sont détectés, dans lequel un message d'état (AL) est généré par une composante (M-1, M, M+1) respective lors d'un changement d'un état précédent à un nouvel état (O, S, T, IE) et affiche le nouvel état (O, S, T, IE), dans lequel une description type (MD) est fournie pour une composante (M) respective d'au moins une partie des composantes (M-1, M, M+1) de l'installation d'automatisation (AS) qui indique respectivement un ou plusieurs état(s) à l'origine (O, S, T, IE) pour un plusieurs états (O, S, T, IE) dans la composante (M) respective qui sont attribués à l'état correspondant (O, S, T, IE) dans la composante respective (M), dans lequel chaque état à l'origine (O, S, T, IE) appartient à une autre composante (M-1, M+1) que la composante (M) respective et peut être une cause pour l'état (O, S, T, IE) dans la composante (M) respective auquel l'état à l'origine (O, S, T, IE) est attribué,
dans lequel pour la composante (M) respective, les étapes suivantes sont exécutées :
a) pour une pluralité de messages d'état (AL) générés par la composante (M) respective, sont déterminés respectivement en se basant sur la description type (MD) de l'état actuel (O, S, T, IE) dans le message d'état (AL) généré, les états à l'origine (O, S, T, IE) attribués à l'état actuel (O, S, T, IE) qui sont présents dans d'autres composantes (M-1, M+1) au temps de génération du message d'état (AL), ainsi que les états à l'origine (O, S, T, IE) attribués à l'état actuel (O, S, T, IE) à partir desquels, lors du dernier changement d'état qui est survenu dans une autre composante (M-1, M+1) respective, le message d'état (AL) a été changé avant le temps de génération, dans lequel pour chaque état à l'origine (O, S, T, IE), le temps de propagation (Δt) entre la survenue de l'état à l'origine (O, S, T, IE) respectif et le temps de génération du message d'état (AL) est calculé ;
b) des groupes (PO1, PO2) sont formés à partir des états à l'origine (O, S, T, IE) qui ont été déterminés à l'étape a) pour la composante (M) respective, dans lequel dans un groupe respectif, tous les états à l'origine (O, S, T, IE) présentent au moins la caractéristique commune qu'ils ont été déterminés pour le même état actuel (O, S, T, IE) dans la composante respective ;
c) un ou plusieurs paramètres statistiques (P1, P2, ..., P5) sont déterminés et enregistrés à partir des temps de propagation (Δt) qui font partie des états à l'origine (O, S, T, IE) du même groupe (PO1, PO2).

2. Procédé selon la revendication 1, dans lequel pour la composante respective (M), les étapes suivantes sont en outre exécutées :
d) pour la pluralité de messages d'état (AL) générés par la composante (M) respective, sont déterminés respectivement en se basant sur la description type (MD) de l'état actuel (O, S, T, IE) dans le message d'état (AL) généré, les états à l'origine (O, S, T, IE) attribués à l'état actuel (O, S, T, IE), à partir desquels, lors du dernier changement d'état qui est survenu dans une autre composante (M-1, M+1) respective, le message d'état (AL) a été changé avant le temps de génération, dans lequel pour chaque état à l'origine (O, S, T, IE), un autre temps de propagation (Δt) entre la fin de l'état à l'origine (O, S, T, IE) respectif et le temps de génération du message d'état (AL) est calculé ;
e) d'autres groupes (PO1, PO2) sont formés à partir des états à l'origine (O, S, T, IE) qui ont été déterminés à l'étape d) pour la composante respective, dans lequel dans un autre groupe respectif, tous les états à l'origine (O, S, T, IE) présentent au moins la caractéristique commune qu'ils ont été déterminés pour le même état actuel (O, S, T, IE) dans la composante respective ;
f) un ou plusieurs paramètres statistiques (P1, P2, ..., P5) sont déterminés à partir des autres temps de propagation (Δt) qui font partie des états à l'origine (O, S, T, IE) du même autre groupe (PO1, PO2).

3. Procédé selon la revendication 1 ou 2, dans lequel le (s) paramètre (s) statistique (s) (P1, P2, ..., P5) comprend/comprennent la valeur minimale (P1) et la valeur maximale (P2) des temps de propagation (Δt) dans le groupe (PO1, PO2) respectif.

4. Procédé selon l'une des revendications précédentes, dans lequel le (s) paramètre (s) statistique (s) (P1, P2, ..., P5) comprend/comprennent la répartition de fréquence (P3) des temps de propagation (Δt) dans le groupe (PO1, PO2) respectif.

5. Procédé selon la revendication 4, dans lequel le (s) paramètre (s) statistique (s) (P1, P2, ..., P5) comprend/comprennent une première valeur quantile (P4) selon laquelle les temps de propagation (Δt) d'un pourcentage prédéfini de la répartition de fréquence (P3) sont situés en-dessous de la première valeur quantile (P4) et/ou le (s) paramètre(s) statistique(s) (P1, P2, ..., P5) comprend/comprennent une deuxième valeur quantile (P5) selon laquelle les temps de propagation (Δt) d'un pourcentage prédéfini de la répartition de fréquence (P3) sont situés au-dessus de la deuxième valeur quantile.

6. Procédé selon la revendication 4 ou 5, dans lequel la répartition de fréquence (P3) est approximée avec une loi de Gauss, et la valeur moyenne et l'écart standard de la loi de Gauss sont déterminés en tant que paramètres statistiques (P1, P2, ..., P5) .

7. Procédé selon l'une des revendications précédentes, dans lequel à l'étape a) et/ou à l'étape d), sont déterminés uniquement les états à l'origine (O, S, T, IE) qui reposent à moins d'un seuil temporel prédéfini avant le temps de génération du message d'état (AL).

8. Procédé selon l'une des revendications précédentes, dans lequel, jusqu'à un temps (t') prédéfini après le commencement du procédé automatisé, le(s) paramètres statistiques (P1, P2, ..., P5) à l'étape c) et/ou à l'étape f) déterminé(s) sont combinés à des paramètres statistiques qui ont été déterminés au préalable pour un autre procédé automatisé de l'installation d'automatisation (AS), dans lequel la combinaison est enregistrée, dans lequel la combinaison est de préférence une somme pondérée et la pondération des paramètres statistiques déterminés au préalable dans la combinaison décroît de préférence à mesure que la baisse de l'écart temporel avec le temps prédéfini augmente.

9. Procédé selon l'une des revendications précédentes, dans lequel le tracé temporel de changements d'état dans les composantes (M-1, M, M+1) de l'installation d'automatisation (AS) avant l'exécution de l'étape a) et/ou d) est ainsi prépréparé que des états (O, S, T, IE) qui cachent qu'un état (O, S, T, IE) présent avant le dernier changement d'état est encore présent dans la composante (M-1, M+1) correspondante sont enlevés du tracé temporel.

10. Procédé selon l'une des revendications précédentes, dans lequel l'installation d'automatisation (AS) est une installation pour fabriquer et/ou traiter un produit, en particulier une installation de remplissage et/ou d'emballage.

11. Dispositif de traitement assisté par ordinateur de messages d'état (AL) dans une installation d'automatisation (AS), dans lequel les messages d'état (AL) sont générés par une pluralité de composantes (M-1, M, M+1) lors de l'exécution d'un procédé automatisé dans l'installation d'automatisation (AS) et avec lesquels des temps de génération (t0, t1) sont détectés, dans lequel un message d'état (AL) est généré par une composante (M-1, M, M+1) respective lors d'un changement d'un état précédent à un nouvel état (O, S, T, IE) et affiche le nouvel état (O, S, T, IE), dans lequel une description type (MD) est fournie pour une composante (M) respective d'au moins une partie des composantes (M-1, M, M+1) de l'installation d'automatisation (AS) qui indique respectivement un ou plusieurs état(s) à l'origine (O, S, T, IE) pour un plusieurs états (O, S, T, IE) dans la composante (M) respective qui sont attribués à l'état correspondant (O, S, T, IE) dans la composante respective (M), dans lequel chaque état à l'origine (O, S, T, IE) appartient à une autre composante (M-1, M+1) que la composante (M) respective et peut être une cause pour l'état (O, S, T, IE) dans la composante (M) respective auquel l'état à l'origine (O, S, T, IE) est attribué,
dans lequel le dispositif est équipé pour l'exécution d'un procédé, dans lequel pour la composante (M) respective, les étapes suivantes sont exécutées :
a) pour une pluralité de messages d'état (AL) générés par la composante (M) respective, sont déterminés respectivement en se basant sur la description type (MD) de l'état actuel (O, S, T, IE) dans le message d'état (AL) généré, les états à l'origine (O, S, T, IE) attribués à l'état actuel (O, S, T, IE) qui sont présents dans d'autres composantes (M-1, M+1) au temps de génération du message d'état (AL), ainsi que les états à l'origine (O, S, T, IE) attribués à l'état actuel (O, S, T, IE) à partir desquels, lors du dernier changement d'état qui est survenu dans une autre composante (M-1, M+1) respective, le message d'état (AL) a été changé avant le temps de génération, dans lequel pour chaque état à l'origine (O, S, T, IE), le temps de propagation (Δt) entre la survenue de l'état à l'origine (O, S, T, IE) respectif et le temps de génération du message d'état (AL) est calculé ;
b) des groupes (PO1, PO2) sont formés à partir des états à l'origine (O, S, T, IE) qui ont été déterminés à l'étape a) pour la composante (M) respective, dans lequel dans un groupe respectif, tous les états à l'origine (O, S, T, IE) présentent au moins la caractéristique commune qu'ils ont été déterminés pour le même état actuel (O, S, T, IE) dans la composante respective ;
c) un ou plusieurs paramètres statistiques (P1, P2, ..., P5) sont déterminés et enregistrés à partir des temps de propagation (Δt) qui font partie des états à l'origine (O, S, T, IE) du même groupe (PO1, PO2).

12. Dispositif selon la revendication 11, dans lequel le dispositif est conçu pour exécuter un procédé selon l'une des revendications 2 à 10.

13. Produit de programme informatique comprenant un code de programme enregistré sur un support lisible sur machine pour l'exécution d'un procédé selon l'une des revendications 1 à 10 lorsque le code de programme est exécuté sur un ordinateur.

14. Programme informatique comprenant un code de programme pour l'exécution d'un procédé selon l'une des revendications 1 à 10 lorsque le code de programme est exécuté sur un ordinateur.
